# EUROPEAN PATENT APPLICATION

(11) **EP 4 654 736 A1**
(43) Date of publication of application: **26.11.2025**
(21) Application number: 23916710.9
(22) Date of filing: 17.01.2023
(51) Int. Cl.: H04W 76/14, H04W 88/04

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2023/072742
(87) International publication number: WO 2024/152220

(57) **Abstract**

Embodiments of the present disclosure relate to the technical field of mobile communication and provide a communication method, an electronic device, and a storage medium. The communication method is applied to a relay end and comprises: receiving a first block acknowledgment request (BA Request) frame sent by a sending end under a first communication connection; and in response to the first BA Request frame, sending a second BA Request frame to a receiving end under a second communication connection. The embodiments of the present disclosure provide a way of implementing BA mechanism in a data relay scenario.

## Description

### TECHNICAL FIELD

The embodiments of the invention relate to a field of mobile communication technology, in particular to a communication method, an electronic device and a storage medium.

### BACKGROUND

With the rapid development of mobile communication technology, wireless networking (Wi-Fi^{™}) technology has made great progress in transmission rate and throughput. The next generation Wi-Fi technology, such as ultra high reliability (UHR), is currently being studied. UHR will improve reliability of wireless local area network (WLAN) connectivity, reduce latencies, increase manageability, increase throughput including at different signal to noise ratio (SNR) levels and reduce device level power consumption. In UHR, in order to improve system throughput, a method of simultaneous communication in sub7GHz+45/60GHZ is proposed.

In UHR, a low-latency service transmission mechanism will be further enhanced to support multi-link scenarios. In order to enhance throughput at different signal-to-noise ratio (SNR) levels, data relay may be used to send data frames in UHR. In data relay scenarios, a block acknowledgment (BA) mechanism needs to be supported. Therefore, it is necessary to provide an implementation of the BA mechanism in the data relay scenarios to meet transmission requirements of UHR.

### SUMMARY

The embodiments of the invention provide a communication method, an electronic device and a storage medium, so as to provide an implementation of a BA mechanism in data relay scenarios.

According to a first aspect of embodiments of the invention, a communication method is provided. The method is applied to a relay station (STA), and includes:
receiving, on a first link, a first BA request frame sent by a source STA; and
in response to the first BA request frame, sending a second BA request frame to a destination STA on a second link.

According to a second aspect of embodiments of the invention, a communication method is provided. The method is applied to a source STA, and includes:
sending a first BA request frame to a relay STA on a first link to instruct the relay STA to send a second BA request frame to a destination STA on a second link.

According to a third aspect of embodiments of the invention, a communication method is provided. The method is applied to a destination STA, and includes:
receiving, on a second link, a second BA request frame sent by a relay STA;
the second BA request frame is sent by the relay STA after receiving, on a first link, a first BA request frame sent by a source STA.

According to a fourth aspect of embodiments of the invention, an electronic device is provided. The electronic device is a relay STA, the electronic device includes:
a first receiving module, configured to receive, on a first link, a first BA request frame sent by a source STA; and
a first sending module, configured to, in response to the first BA request frame, send a second BA request frame to a destination STA on a second link.

According to a fifth aspect of embodiments of the invention, an electronic device is provided. The electronic device is a source STA, the electronic device includes:
a second sending module, configured to send a first BA request frame to a relay STA on a first link to instruct the relay STA to send a second BA request frame to a destination STA on a second link.

According to a sixth aspect of embodiments of the invention, an electronic device is provided. The electronic device is a destination STA, the electronic device includes:
a second receiving module, configured to receive, on a second link, a second BA request frame sent by a relay STA;
the second BA request frame is sent by the relay STA after receiving, on a first link, a first BA request frame sent by a source STA.

The embodiment of the invention also provides an electronic device. The electronic device includes: a memory, a processor and a computer program stored in the memory and executable by the processor. When the computer program is executed by the processor, one or more of the methods described in the embodiments of the invention are implemented.

The embodiment of the invention also provides a computer-readable storage medium. The computer-readable storage medium stores a computer program, and when the computer program is executed by a processor, one or more of the methods described in the embodiments of the invention are implemented.

In the embodiments of the invention, when the relay STA receives on the first link the first BA request frame sent by the source STA, it sends the second BA request frame to the destination STA on the second link, without having to transmit the BA message frame based on a contention access channel, thereby avoiding conflicts caused by the introduction of the contention access channel and reducing excessive latency. The embodiments of the invention provide an implementation of the BA mechanism in data relay scenarios to meet transmission requirements of UHR.

Additional aspects and advantages of the embodiments of the invention will be given in part in the following descriptions, become apparent in part from the following descriptions, or be learned from the practice of the invention.

### BRIEF DESCRIPTION OF THE DRAWINGS

In order to clearly illustrate the technical solutions of the embodiments of the invention, a brief description of drawings used in the embodiments of the invention is given below. Obviously, the drawings in the following description are only part of the embodiments of the invention, and for those skilled in the art, other drawings can be obtained according to these drawings without inventive works.
FIG. 1 is a flowchart of a communication method provided by an embodiment of the invention.
FIG. 2 is a first schematic diagram of a first example of an embodiment of the invention.
FIG. 3 is a second schematic diagram of the first example of an embodiment of the invention.
FIG. 4 is a third schematic diagram of the first example of an embodiment of the invention.
FIG. 5 is a schematic diagram of a second example of an embodiment of the invention.
FIG. 6 is a second flowchart of the communication method provided by an embodiment of the invention.
FIG. 7 is a third flowchart of the communication method provided by an embodiment of the invention.
FIG. 8 is a first schematic diagram of an electronic device provided by an embodiment of the invention.
FIG. 9 is a second schematic diagram of the electronic device provided by an embodiment of the invention.
FIG. 10 is a third schematic diagram of the electronic device provided by an embodiment of the invention.
FIG. 11 is a fourth schematic diagram of the electronic device provided by an embodiment of the invention.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the attached claims.

The terms used in the embodiments of the invention are only for the purpose of describing specific embodiments, and are not intended to limit the invention. The singular forms of "a" and "the" used in the invention and the attached claims are also intended to include plural forms, unless the context clearly indicates other meanings. It should also be understood that the term "and/or" as used herein refers to and includes any or all possible combinations of one or more associated listed items. For example, "A and/or B" indicates that A exists alone, A and B both exist, and B exists alone. The character "/" generally indicates that associated objects before and after the character "/" is in an "or" relation. The term "multiple" refers to two or more, and it may be understood as "at least two" in the embodiment of the invention.

It is understandable that although the terms "first", "second", and "third" may be used in the invention to describe various information, the information should not be limited to these terms. These terms are only used to distinguish the same type of information from each other. For example, without departing from the scope of the invention, the first information may also be referred to as the second information, and similarly, the second information may also be referred to as the first information. Depending on the context, the term "if" as used herein can be interpreted as "when", "while" or "in response to determining".

The technical solutions in the embodiments of the invention will be described clearly and completely below in combination with the accompanying drawings in the embodiments of the invention. Clearly, the described embodiments are only a part of the embodiments of the invention, and not all of the embodiments. Based on the embodiments of the invention, other embodiments obtained by those skilled in the art without inventive works all fall within the scope of protection of the invention.

The embodiments of the invention provide a communication method, an electronic device and a storage medium, to provide an implementation of the BA mechanism in data relay scenarios.

The method and device are based on the same application concept, and since the method and device solve problems based on similar principles, the implementations of the device and the method can be referred to each other, and repeated contents will not elaborated again.

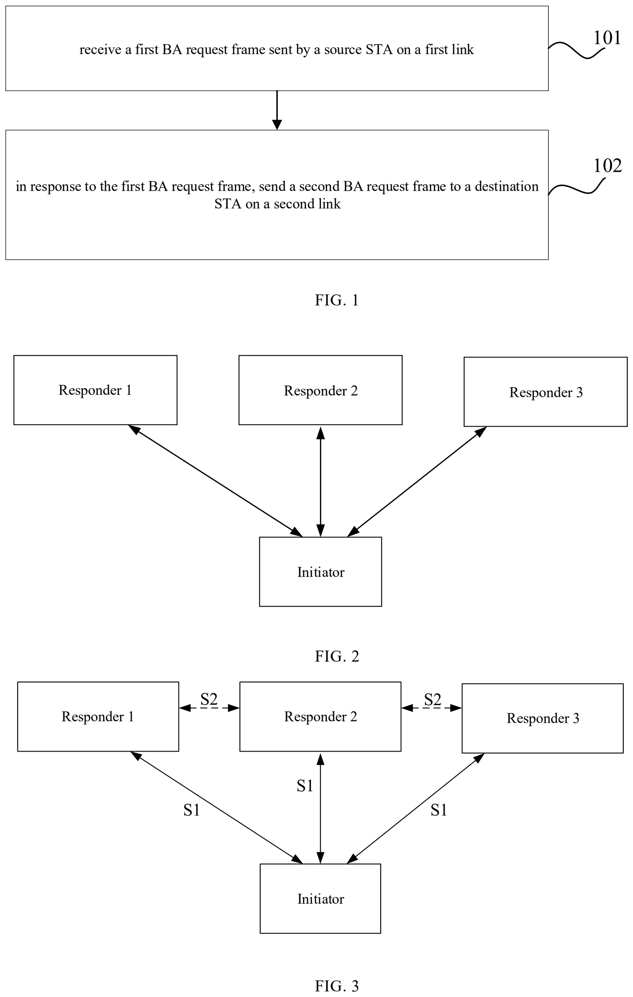

As illustrated in FIG. 1, the embodiment of the invention provides a communication method. In an embodiment, the method is applied to a relay STA, such as an access point (AP) and a STA. In the embodiment of the invention, the AP may be a device having a wireless to wired bridging function, and is responsible for extending services provided by a wired network to a wireless network. The STA may be an electronic device having a wireless network access function, and is able to provide a frame delivery service to transfer information.

In a WLAN, a basic service set (BSS) may be composed of APs and one or more STAs that are in communication with the APs. A BSS can be connected to a distribution system (DS) through its APs, and then connected to another BSS to form an extended service set (ESS). As a first example, as illustrated in FIG. 2, an AP1 and an STA1 constitute a BSS1, and an AP2 and an STA2 constitute a BSS2. An overlapping BSS (OBSS) is formed when coverage areas of two or more BSSs are overlapped. As illustrated in FIG. 2, when the BSS1 and the BSS2 are overlapped, an OBSS is formed.

In the embodiment of the invention, the AP and the STA may be multi-link devices (MLDs), which are represented as AP MLD and non-AP MLD, respectively. The AP MLD represents an AP that supports multi-link communication functions, and the non-AP MLD represents an STA that supports multi-link communication functions.

As illustrated in FIG. 3, the AP MLD includes three affiliated APs, i.e., an AP1, an AP2 and an AP3, and each AP can work on a Link 1, a Link 2 and a Link 3, respectively. The non-AP MLD includes three affiliated STAs, i.e., an STA1, an STA2 and an STA3 as illustrated in FIG. 2. The STA1 works in the Link 1, the STA2 works in the Link 2 and the STA3 works in the Link 3.

For ease of description, the following mainly describes an example in which an AP communicates with an STA on multiple links, and the example embodiments of the invention are not limited thereto. In the example of FIG. 3, the AP1 communicates with the STA1 via the Link 1. Similarly, the AP2 communicates with the STA2 via the Link 2, and the AP3 communicates with the STA3 via the Link 3. The Link 1, the Link 2 and the Link 3 are links at different frequencies, for example, links at 2.4GHz, 5GHz and 6 GHz, or links having the same or different bandwidths at 2.4GHz. In addition, each link may contain a plurality of channels. It is understood that the communication scenario shown in FIG. 2 is only exemplary, and the concept of the invention is not limited thereto. For example, the AP MLD may be connected to multiple (e.g., three) non-AP MLDs, or the AP may communicate with other types of STAs under each link.

The method includes the following steps.

At step 101, a first BA request frame sent by a source STA is received on a first link.

At step 102, in response to the first BA request frame, a second BA request frame is sent to a destination STA on a second link.

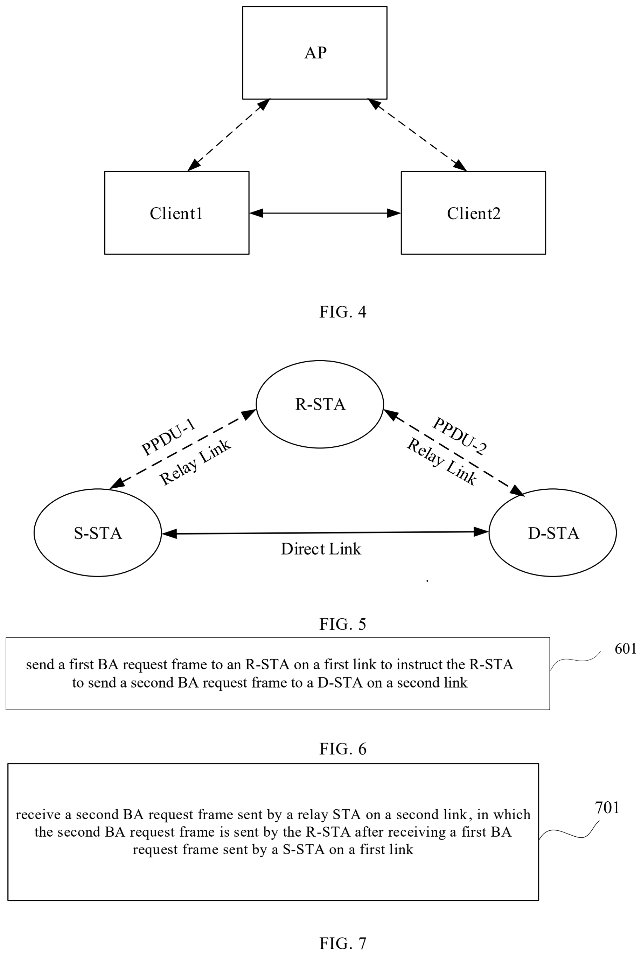

In UHR, data frames can be transmitted through a data relay process. As a second example, as illustrated in FIG. 5, during the data relay process, a source STA (S-STA) sends a relay data frame, e.g., physical layer protocol data unit (PPDU)-1, to a relay STA (R-STA) through a relay link. The R-STA performs necessary address filling on the relay data frame, and forwards the relay data frame (e.g., PPDU-2) after the filling process to a destination STA (D-STA). In addition, the S-STA may send a data frame to the D-STA through a direct link. In the embodiment of the invention, the R-STA may be an AP. For ease of explanation, STA is introduced as the R-STA in the following, but this does not constitute a limitation to the embodiment of the invention.

In UHR, devices may also communicate via multiple links, and after the data frame is relayed, a BA mechanism is required. For example, the D-STA feeds back an acknowledgement (ACK) message frame or a BA message frame to the R-STA, or the R-STA feeds back an ACK message frame or a BA message frame to the S-STA, to determine a reception status of the relay data frame.

In the embodiment of the invention, after receiving on the first link the first BA request frame sent by the S-STA, the R-STA sends the second BA request frame to the D-STA on the second link. The first BA request frame is used to request the R-STA to send an ACK message frame or a BA message frame;
That is, after receiving the first BA request frame on one link, the R-STA sends the second BA request frame on another link. The first BA request frame and the second BA request frame are used to request a corresponding peer STA to send a BA message frame (or an ACK message frame), respectively.

In detail, the S-STA sends the first BA request frame to the R-STA on the first link to request the R-STA to feed back a BA message frame. After receiving the first BA request frame on the first link, the R-STA sends the second BA request frame on another link (which refers to the second link) simultaneously. The second BA request frame is used to request the D-STA to feed back a BA message frame. Therefore, when the R-STA receives the BA message frame sent by the S-STA on a link, it sends the BA message frame on another link, without having to send the BA message frame based on a contention access channel, thereby avoiding conflicts caused by the introduction of the contention access channel and reducing excessive latency.

In the embodiment of the invention, when the R-STA receives the first BA request frame sent by the S-STA on the first link, it sends the second BA request frame to the D-STA on the second link, without having to send the BA message frame based on a contention access channel, thereby avoiding conflicts caused by the introduction of the contention access channel and reducing excessive latency. The embodiment of the invention provides an implementation of the BA mechanism in data relay scenarios to meet transmission requirements of UHR.

The embodiment of the invention provides a communication method. In an embodiment, the method is applied to an R-STA, and includes the following steps:
receiving, on a first link, a first BA request frame sent by an S-STA;
in response to the first BA request frame, sending a second BA request frame to a D-STA on a second link;
the first BA request frame includes first identification information, and the first identification information indicates a link on which the S-STA receives a first BA message frame, such as a link identifier (ID). The first BA message frame is a BA message frame corresponding to the first BA request frame. According to a power saving (PS) status of each link, the S-STA carries the link for it to receive the feedback BA message frame from the R-STA in the first BA request frame, for example, selecting a link that is not in the PS status at the current moment as the link used for receiving the feedback BA message frame from the R-STA.

The embodiment of the invention provides a communication method. In an embodiment, the method is applied to an R-STA, and includes the following steps:
receiving, on a first link, a first BA request frame sent by an S-STA;
in response to the first BA request frame, sending a second BA request frame to a D-STA on a second link, in which the first BA request frame includes first identification information, the first identification information indicates a link on which the S-STA receives a first BA message frame, and the first BA message frame is a BA message frame corresponding to the first BA request frame; and
receiving, on the second link, a second BA message frame sent by the D-STA, in which the second BA message frame is a BA message frame corresponding to the second BA request frame.

After the R-STA sends the second BA request frame on the second link, it receives, on the second link, the BA message frame sent by the D-STA, in order to confirm a reception status of the relay data frame by the D-STA.

The embodiment of the invention provides a communication method. In an embodiment, the method is applied to an R-STA, and includes the following steps:
receiving, on a first link, a first BA request frame sent by an S-STA;
in response to the first BA request frame, sending a second BA request frame to a D-STA on a second link, in which the first BA request frame includes first identification information, the first identification information indicates a link on which the S-STA receives a first BA message frame, and the first BA message frame is a BA message frame corresponding to the first BA request frame; and
receiving, on the second link, a second BA message frame sent by the D-STA, in which the second BA message frame is a BA message frame corresponding to the second BA request frame; and
sending the first BA message frame to the S-STA on the link indicated by the first identification information.

After confirming that the D-STA has successfully received the relay data frame, the R-STA receives the BA message frame sent by the D-STA on the second link, the R-STA sends the first BA message frame to the S-STA on the link indicated by the first identification information to inform the S-STA that the relay data frame has been successfully received by the D-STA.

In an embodiment, in the embodiment of the invention, there are at least two links between the R-STA and the S-STA, and first duration information of the first BA request frame is time length information of the first BA request frame. If the S-STA and the R-STA support multi-link operation and have established a plurality of links, after the first BA request frame is sent, the S-STA and the R-STA do not need to exchange other messages for requesting the BA message frame, so that a Duration field of the first BA request frame is set to the length of the first BA request frame itself, so as to avoid excessive delays caused by additional exchanging times.

The embodiment of the invention provides a communication method. In an embodiment, the method is applicable to an R-STA, and includes:
receiving, on a first link, a first BA request frame sent by an S-STA; and
in response to the first BA request frame, sending a second BA request frame to a D-STA on a second link, and sending a first ACK message frame to the S-STA; and feeding back an ACK message frame to the S-STA after the first BA request frame sent by the S-STA on the first link is received, to confirm a successful reception of the first BA request frame.

The embodiment of the invention provides a communication method. In an embodiment, the method is applicable to an R-STA, and includes:
receiving, on a first link, a first BA request frame sent by an S-STA;
in response to the first BA request frame, sending a second BA request frame to a D-STA on a second link; and
sending a first ACK message frame to the S-STA.

Second duration information of the first ACK message frame includes a sum of a duration of the second BA request frame, a duration of a first short inter frame space (SIFS) and a duration of a second BA message frame, and the second BA message frame is a BA message frame corresponding to the second BA request frame.

After the R-STA sends the first ACK message frame to the S-STA, it will continue to interact with the D-STA through the second BA request frame and the second BA message frame. Therefore, a Duration field of the first ACK message frame is set to a sum of a duration of the second BA request frame, a duration of a second SIFS between the first ACK message frame and the second BA request frame, and a duration of the second BA message frame, so that the R-STA and the D-STA are able to exchange the second BA request frame and the second BA message frame within the second duration.

In an embodiment, in the embodiment of the invention, the second duration information further includes a sum of a duration of the first BA request frame and a duration of the second SIFS.

In addition, the duration of the first BA message frame and the duration of the second SIFS between the first ACK message frame and the second BA request frame may be added to the second duration information.

In an embodiment, in the embodiment of the invention, the method further includes:
receiving an ADDBA request frame sent by the S-STA, in which the ADDBA request frame includes second identification information, and the second identification information indicates that the S-STA receives the first BA message frame. Before sending continuous relay data frames, the S-STA and the R-STA negotiate a BA feedback mechanism. The S-STA carries second identification information in the ADDBA request frame, to indicate that it will wait a long time to receive the first BA frame fed back by the R-STA after sending the first BA request frame to the R-STA after sending the relay data frames (because the R-STA needs to confirm the reception status of the relay data frames with the D-STA).

The embodiment of the invention provides a communication method. In an embodiment, the method is applicable to an R-STA, and includes:
receiving, on a first link, a first BA request frame sent by an S-STA; and
in response to the first BA request frame, sending a second BA request frame to a D-STA on a second link.

In an embodiment, the first BA request frame includes first identification information, and the first identification information indicates a link on which the S-STA receives a first BA message frame;
the first BA message frame is a BA message frame corresponding to the first BA request frame.

In an embodiment, after sending the second BA request frame to the D-STA on the second link, the method includes:
receiving, on the second link, a second BA message frame sent by the D-STA;
the second BA message frame is a BA message frame corresponding to the second BA request frame.

In an embodiment, after receiving the second BA message frame sent by the D-STA on the second link, the method includes:
sending the first BA message frame to the S-STA on the link indicated by the first identification information.

In an embodiment, there are at least two links between the R-STA and the S-STA, and first duration information of the first BA request frame is time length information of the first BA request frame.

In an embodiment, after receiving the first BA request frame sent by the S-STA on the first link, the method includes:
sending a first ACK message frame to the S-STA.

In an embodiment, second duration information of the first ACK message frame includes a sum of a duration of the second BA request frame, a duration of a first SIFS and a duration of a second BA message frame, and the second BA message frame is a BA message frame corresponding to the second BA request frame.

In an embodiment, the second duration information further includes a sum of a duration of the first BA request frame and a duration of a second SIFS.

In an embodiment, the method further includes:
receiving an ADDBA request frame sent by the S-STA, in which the ADDBA request frame includes second identification information, and the second identification information indicates that the S-STA receives the first BA message frame.

In the embodiment of the invention, when the R-STA receives the first BA request frame sent by the S-STA on the first link, it sends the second BA request frame to the D-STA on the second link, without having to send the BA message frame based on a contention access channel, thereby avoiding conflicts caused by the introduction of the contention access channel and reducing excessive latency. The embodiment of the invention provides an implementation of the BA mechanism in data relay scenarios to meet transmission requirements of UHR.

As illustrated in FIG. 6, the embodiment of the invention provides a communication method. In an embodiment, the method is applicable to an S-STA, such as a STA.

The method may include the following steps:
Step 601: sending a first BA request frame to an R-STA on a first link to instruct the R-STA to send a second BA request frame to a D-STA on a second link.

The WLAN architecture to which the communication method provided by the embodiment of the invention is applied refers to the aforementioned first example, which will not be repeated here.

In UHR, data frames can be transmitted through a data relay process. As a second example, as illustrated in FIG. 5, during the data relay process, an S-STA sends a relay data frame, e.g., PPDU-1, to an R-STA through a relay link. The R-STA performs necessary address filling on the relay data frame, and forwards the relay data frame (e.g., PPDU-2) after the filling process to a D-STA. In addition, the S-STA may send a data frame to the D-STA through a direct link. In the embodiment of the invention, the R-STA may be an AP. For ease of explanation, STA is introduced as the R-STA in the following, but this does not constitute a limitation to the embodiment of the invention.

In UHR, devices may also communicate via multiple links, and after the data frame is relayed, a BA mechanism is required. For example, the D-STA feeds back an ACK message frame or a BA message frame to the R-STA, or the R-STA feeds back an ACK message frame or a BA message frame to the S-STA, to determine a reception status of the relay data frame.

In the embodiment of the invention, after receiving the first BA request frame sent by the S-STA on the first link, the R-STA sends the second BA request frame to the D-STA on the second link. The first BA request frame is used to request the R-STA to send an ACK message frame or a BA message frame.

That is, the S-STA sends the first BA request frame to the R-STA on the first link to instruct the R-STA to send the second BA request frame to the D-STA on another link. The first BA request frame and the second BA request frame are used to request a corresponding peer STA to send a BA message frame (or an ACK message frame), respectively.

In detail, the S-STA sends the first BA request frame to the R-STA on the first link to request the R-STA to feed back a BA message frame. After receiving the first BA request frame on the first link, the R-STA sends the second BA request frame on another link (i.e., the second link), simultaneously. The second BA request frame is used to request the D-STA to feed back a BA message frame. When the R-STA receives the BA message frame sent by the S-STA, it sends the BA message frame on another link, without having to send the BA message frame based on a contention access channel, thereby avoiding conflicts caused by the introduction of the contention access channel and reducing excessive latency.

In the embodiment of the invention, the S-STA sends the first BA request frame to the R-STA on the first link to instruct the R-STA to send the second BA request frame to the D-STA on another link, without having to send the BA message frame based on a contention access channel, thereby avoiding conflicts caused by the introduction of the contention access channel and reducing excessive latency.

The embodiment of the invention provides a communication method. In an embodiment, the method is applied to an S-STA, and includes the following step:
sending a first BA request frame to an R-STA on a first link to instruct the R-STA to send a second BA request frame a D-STA on a second link.

The first BA request frame includes first identification information. The first identification information indicates a link on which the S-STA receives a first BA message frame, such as link ID. The first identification information is used to indicate the link on which the S-STA receives the first BA message frame.

The first BA message frame is a BA message frame corresponding to the first BA request frame. According to a PS status of each link, the S-STA carries the link for it to receive the feedback BA message frame from the R-STA in the first BA request frame, for example, selecting a link that is not in the PS status at the current moment as the link used for receiving the feedback BA message frame from the R-STA.

In an optional embodiment, the method further includes:
receiving the first BA message frame sent by the R-STA on the link indicated by the first identification information, in which the first BA message frame is sent by the R-STA after receiving, on the second link, a second BA message frame sent by the D-STA.

The R-STA sends the first BA message frame to the S-STA on the link indicated by the first identification information after confirming that the D-STA has successfully received the relay data frame, to inform the S-STA that the relay data frame has been successfully received by the D-STA. The S-STA receives the first BA message frame sent by the R-STA on the link indicated by the first identification information.

In an optional embodiment, there are at least two links between the R-STA and the S-STA, and first duration information of the first BA request frame is time length information of the first BA request frame. If the S-STA and the R-STA support multi-link operation and have established a plurality of links, after the first BA request frame is sent, the S-STA and the R-STA do not need to exchange other messages for requesting the BA message frame, so that a Duration field of the first BA request frame is set to the length of the first BA request frame itself, so as to avoid excessive delays caused by additional exchanging times.

The embodiment of the invention provides a communication method. In an embodiment, the method is applied to an S-STA, and includes the following steps:
sending a first BA request frame to an R-STA on a first link to instruct the R-STA to send a second BA request frame to a D-STA on a second link; and
receiving a first ACK message frame sent by the R-STA.

The S-STA receives on the first link the ACK message frame fed back by the R-STA, which indicates a successful reception of the first BA request frame.

The embodiment of the invention provides a communication method. In an embodiment, the method is applied to an S-STA, and includes the following steps:
sending a first BA request frame to an R-STA on a first link to instruct the R-STA to send a second BA request frame to a D-STA on a second link; and
receiving a first ACK message frame sent by the R-STA.

Second duration information of the first ACK message frame includes a sum of a duration of the second BA request frame, a duration of a first SIFS and a duration of a second BA message frame, and the second BA message frame is a BA message frame corresponding to the second BA request frame.

After the R-STA sends the first ACK message frame to the S-STA, it will continue to interact with the D-STA through the second BA request frame and the second BA message frame. Therefore, a Duration field of the first ACK message frame is set to a sum of the duration of the second BA request frame, a duration of a second SIFS between the first ACK message frame and the second BA request frame, and a duration of the second BA message frame, so that the R-STA and the D-STA are able to exchange the second BA request frame and the second BA message frame within the second duration.

In an optional embodiment, the second duration information further includes a sum of a duration of the first BA request frame and a duration of the second SIFS. In addition, the duration of the first BA message frame and the duration of the second SIFS between the first ACK message frame and the second BA request frame may be added to the second duration information.

The embodiment of the invention provides a communication method. In an embodiment, the method is applied to an S-STA, and includes the following steps:
determining an ADDBA request frame, in which the ADDBA request frame includes second identification information, and the second identification information indicates that the S-STA receives a first BA message frame; and
sending the ADDBA request frame.

Before sending continuous relay data frames, the S-STA and the R-STA negotiate a BA feedback mechanism. The S-STA carries the second identification information in the ADDBA request frame, to indicate that it will wait a long time to receive the first BA frame fed back by the R-STA after sending the first BA request frame to the R-STA after sending the relay data frames (because the R-STA needs to confirm the reception status of the relay data frames with the D-STA).

The embodiment of the invention provides a communication method. In an embodiment, the method is applied to an S-STA, and includes the following steps:
sending a first BA request frame to an R-STA on a first link to instruct the R-STA to send a second BA request frame to a D-STA on a second link.

In an embodiment, the first BA request frame includes first identification information, and the first identification information indicates a link on which the S-STA receives a first BA message frame;
the first BA message frame is a BA message frame corresponding to the first BA request frame.

In an embodiment, the method includes:
receiving the first BA message frame sent by the R-STA on the link indicated by the first identification information, in which the first BA message frame is sent by the R-STA after receiving, on the second link, a second BA message frame sent by the D-STA.

In an embodiment, there are at least two links between the R-STA and the S-STA, and first duration information of the first BA request frame is time length information of the first BA request frame.

In an embodiment, after sending the first BA request frame to the R-STA on the first link, the method includes:
receiving a first ACK message frame sent by the R-STA.

In an embodiment, second duration information of the first ACK message frame includes a sum of a duration of the second BA request frame, a duration of a first SIFS and a duration of a second BA message frame, and the second BA message frame is a BA message frame corresponding to the second BA request frame.

In an embodiment, the second duration information further includes a sum of a duration of the first BA request frame and a duration of a second SIFS.

In an embodiment, the method further includes:
determining an ADDBA request frame, in which the ADDBA request frame includes second identification information, and the second identification information indicates that the S-STA receives the first BA message frame; and
sending the ADDBA request frame.

In the embodiment of the invention, the S-STA sends the first BA request frame to the R-STA on the first link to instruct the R-STA to send the second BA request frame to the D-STA on another link, without having to send the BA message frame based on a contention access channel, thereby avoiding conflicts caused by the introduction of the contention access channel and reducing excessive latency. The embodiment of the invention provides an implementation of the BA mechanism in data relay scenarios to meet transmission requirements of UHR.

As illustrated in FIG. 7, the embodiment of the invention provides a communication method. In an embodiment, the method is applicable to a D-STA, such as a STA.

The method includes the following step:
Step 701, receiving, on a second link, a second BA request frame sent by a relay STA;
the second BA request frame is sent by the R-STA after receiving, on a first link, a first BA request frame sent by an S-STA.

The WLAN architecture to which the communication method provided by the embodiment of the invention is applied refers to the aforementioned first example, which will not be repeated here.

In UHR, data frames can be transmitted through a data relay process. As a second example, as illustrated in FIG. 5, during the data relay process, an S-STA sends a relay data frame, e.g., PPDU-1, to an R-STA through a relay link. The R-STA performs necessary address filling on the relay data frame, and forwards the relay data frame (e.g., PPDU-2) after the filling process to a D-STA. In addition, the S-STA may send a data frame to the D-STA through a direct link. In the embodiment of the invention, the R-STA may be an AP. For ease of explanation, STA is introduced as the R-STA in the following, but this does not constitute a limitation to the embodiment of the invention.

In UHR, devices may also communicate via multiple links, and after the data frame is relayed, a BA mechanism is required. For example, the D-STA feeds back an ACK message frame or a BA message frame to the R-STA, or the R-STA feeds back an ACK message frame or a BA message frame to the S-STA, to determine a reception status of the relay data frame.

In the embodiment of the invention, after receiving the first BA request frame sent by the S-STA on the first link, the R-STA sends the second BA request frame to the D-STA on the second link. The D-STA receives the second BA request frame sent by the R-STA on the second link.

The first BA request frame is used to request the R-STA to send an ACK message frame or a BA message frame.

That is, after receiving the first BA request frame, the R-STA sends the second BA request frame on another link. The first BA request frame and the second BA request frame are used to request a corresponding peer STA to send a BA message frame (or an ACK message frame), respectively.

In detail, the S-STA sends the first BA request frame to the R-STA on the first link to request the R-STA to feed back a BA message frame. After receiving the first BA request frame on the first link, the R-STA sends the second BA request frame on another link (which refers to the second link) simultaneously. The second BA request frame is used to request the D-STA to feed back a BA message frame. Therefore, when the R-STA receives the BA message frame sent by the S-STA on a link, it sends the BA message frame on another link, without having to send the BA message frame based on a contention access channel, thereby avoiding conflicts caused by the introduction of the contention access channel and reducing excessive latency.

The embodiment of the invention provides a communication method. In an embodiment, the method is applicable to a D-STA, such as a STA.

The method includes:
receiving a second BA request frame sent by an R-STA on a second link;
the second BA request frame is sent by the R-STA after receiving, on a first link, a first BA request frame sent by an S-STA; and
sending a second BA message frame to the R-STA on the second link;
the second BA message frame is a BA message frame corresponding to the second BA request frame, and the D-STA sends the second BA message frame to the R-STA on the second link to confirm a reception status of a relay data frame by the D-STA.

In the embodiment of the invention, the D-STA receives the second BA request frame sent by the R-STA on the second link. The second BA request frame is sent by the R-STA after receiving the first BA request frame sent by the S-STA on the first link, without having to send the second BA request frame by the R-STA based on a contention access channel, thereby avoiding conflicts caused by the introduction of the contention access channel and reducing excessive latency. The embodiment of the invention provides an implementation of the BA mechanism in data relay scenarios to meet transmission requirements of UHR.

The embodiment of the invention provides a communication method, which is applied to a wireless transmission system. The wireless transmission system includes: an S-STA, an R-STA and a D-STA. As an example, as illustrated in FIG. 5, the S-STA sends a first BA request frame to an R-STA through a first link (e.g., the Relay Link in FIG. 5). The first BA request frame is used to request the R-STA to send an ACK message frame or a BA message frame.

After receiving the first BA request frame on the first link, the R-STA sends the second BA request frame to the D-STA on the second link with the D-STA. The second BA request frame is used to request the D-STA to feed back a BA message frame.

In this way, when the R-STA receives the BA message frame sent by the S-STA, it sends the BA message frame on another link, without having to send the BA message frame based on a contention access channel, thereby avoiding conflicts caused by the introduction of the contention access channel and reducing excessive latency.

In an embodiment, the first BA request frame includes first identification information, and the first identification information indicates a link used for the S-STA to receive a first BA message frame;
the first BA message frame is a BA message frame corresponding to the first BA request frame.

In an embodiment, after sending the second BA request frame to the D-STA on the second link, the R-STA receives on the second link a second BA message frame sent by the D-STA;
the second BA message frame is a BA message frame corresponding to the second BA request frame.

In an embodiment, after receiving the second BA message frame sent by the D-STA on the second link, the R-STA sends the first BA message frame to the S-STA on the link indicated by the first identification information.

In an embodiment, there are at least two links between the R-STA and the S-STA, and first duration information of the first BA request frame is time length information of the first BA request frame.

In an embodiment, the R-STA sends a first ACK message frame to the S-STA after receiving the first BA request frame sent by the S-STA on the first link.

In an embodiment, second duration information of the first ACK message frame includes a sum of a duration of the second BA request frame, a duration of a first SIFS and a duration of a second BA message frame, and the second BA message frame is a BA message frame corresponding to the second BA request frame.

In an embodiment, the second duration information further includes a sum of a duration of the first BA request frame and a duration of a second SIFS.

In an embodiment, the R-STA receives an ADDBA request frame sent by the S-STA, in which the ADDBA request frame includes second identification information, and the second identification information indicates that the S-STA receives the first BA message frame.

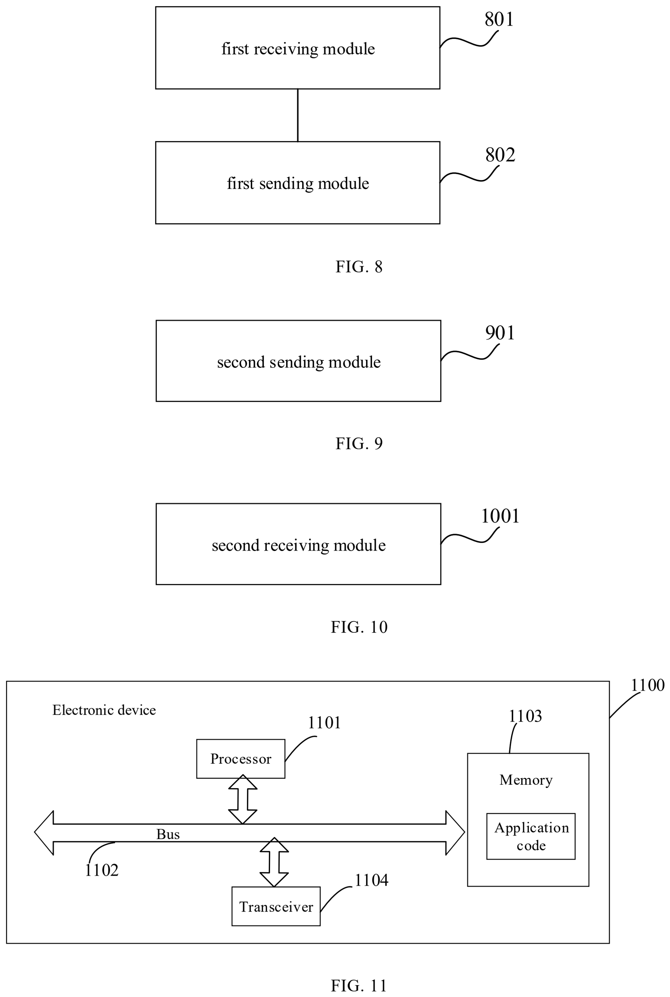

As illustrated in FIG. 8, based on the same principle as the method provided by the embodiment of the invention, the embodiment of the invention also provides an electronic device. The electronic device is an R-STA, and includes:
a first receiving module 801, configured to receive, on a first link, a first BA request frame sent by an S-STA; and
a first sending module 802, configured to, in response to the first BA request frame, send a second BA request frame to a D-STA on a second link.

In an embodiment, the first BA request frame includes first identification information, and the first identification information indicates a link on which the S-STA receives a first BA message frame;
the first BA message frame is a BA message frame corresponding to the first BA request frame.

In an embodiment, the electronic device includes:
a third receiving module, configured to receive, on the second link, a second BA message frame sent by the D-STA;
the second BA message frame is a BA message frame corresponding to the second BA request frame.

In an embodiment, the electronic device includes:
a third sending module, configured to send the first BA message frame to the S-STA on the link indicated by the first identification information.

In an embodiment, there are at least two links between the R-STA and the S-STA, and first duration information of the first BA request frame is time length information of the first BA request frame.

In an embodiment, after receiving on the first link the first BA request frame sent by the S-STA, the method includes:
sending a first ACK message frame to the S-STA.

In an embodiment, second duration information of the first ACK message frame includes: a sum of a duration of the second BA request frame, a duration of a first SIFS and a duration of a second BA message frame, and the second BA message frame is a BA message frame corresponding to the second BA request frame.

In an embodiment, the second duration information includes a sum of a duration of the first BA request frame and a duration of a second SIFS.

In an embodiment, the electronic device further includes:
a fourth receiving module, configured to receive an ADDBA request frame sent by the S-STA, in which the ADDBA request frame includes second identification information, and the second identification information indicates that the S-STA receives the first BA message frame.

The embodiment of the invention also provides a communication apparatus. The apparatus is applicable to an R-STA, and includes:
a first wireless frame receiving module, configured to receive, on a first link, a first BA request frame sent by an S-STA; and
a first wireless frame sending module, configured to, in response to the first BA request frame, send a second BA request frame to a D-STA on a second link.

The apparatus also includes other modules of the electronic device in the above embodiment, which will not be described in detail here.

As illustrated in FIG. 9, based on the same principle as the method provided by the embodiment of the invention, the embodiment of the invention also provides an electronic device. The electronic device is an S-STA, and includes:
a second sending module 901, configured to send a first BA request frame to an R-STA on a first link to instruct the R-STA to send a second BA request frame to a D-STA on a second link.

In an embodiment, the first BA request frame includes first identification information, and the first identification information indicates a link used for the S-STA to receive a first BA message frame;
the first BA message frame is a BA message frame corresponding to the first BA request frame.

In an embodiment, the electronic device includes:
a fourth receiving module, configured to receive the first BA message frame sent by the R-STA on the link indicated by the first identification information, in which the first BA message frame is sent by the R-STA after receiving, on the second link, a second BA message frame sent by the D-STA.

In an embodiment, there are at least two links between the R-STA and the S-STA, and first duration information of the first BA request frame is time length information of the first B A request frame.

In an embodiment, the electronic device includes:
a fifth receiving module, configured to receive a first ACK message frame sent by the R-STA.

In an embodiment, second duration information of the first ACK message frame includes a sum of a duration of the second BA request frame, a duration of a first SIFS and a duration of a second BA message frame, and the second BA message frame is a BA message frame corresponding to the second BA request frame.

In an embodiment, the second duration information further includes a sum of a duration of the first BA request frame and a duration of a second SIFS.

In an embodiment, the electronic device includes:
a determining module, configured to determine an ADDBA request frame, in which the ADDBA request frame includes second identification information, and the second identification information indicates that the S-STA receives the first BA message frame; and
a sending module, configured to send the ADDBA request frame.

The embodiment of the invention also provides a communication apparatus. The apparatus is applicable to an R-STA, and includes:
a second wireless frame sending module, configured to send a first BA request frame to an R-STA on a first link to instruct the R-STA to send a second BA request frame to a D-STA on a second link.

The apparatus also includes other modules of the electronic device in the above embodiment, which will not be described in detail here.

As illustrated in FIG. 10, based on the same principle as the method provided by the embodiment of the invention, the embodiment of the invention also provides an electronic device. The electronic device is a D-STA, and includes:
a second receiving module 1001, configured to receive, on a second link, a second BA request frame sent by an R-STA;
the second BA request frame is sent by the relay STA after receiving, on a first link, a first BA request frame sent by an S-STA.

In an embodiment, the electronic device further includes:
a fourth sending module, configured to send a second BA message frame to the R-STA on the second link;
the second BA message frame is a BA message frame corresponding to the second BA request frame.

The embodiment of the invention also provides a communication apparatus. The apparatus is applicable to an R-STA, and includes:
a second wireless frame receiving module, configured to receive, on a second link, a second BA request frame sent by an R-STA;
the second BA request frame is sent by the R-STA after receiving, on a first link, a first BA request frame sent by an S-STA.

The device also includes other modules of the electronic device in the aforementioned embodiment, which will not be described in detail here.

In an optional embodiment, the embodiment of the invention also provides an electronic device. As illustrated in FIG. 11, the electronic device 1100 shown in FIG. 11 may be a server, which includes: a processor 1101 and a memory 1103. The processor 1101 is connected to the memory 1103, for example, via a bus 1102. In an embodiment, the electronic device 1100 may also include a transceiver 1104. It should be noted that there may be one or more transceivers 1104 in practical applications, and the structure of the electronic device 1100 does not constitute a limitation on the embodiments of the invention.

The processor 1101 may be a central processing unit (CPU), a general purpose processor, a digital signal processor (DSP), an application specific integrated circuit (ASIC), a field programmable gate array (FPGA) or other programmable logic devices, transistor logic devices, hardware components, or any combination thereof. The processor 1101 may implement or execute various exemplary logic boxes, modules and circuits described in combination with the contents disclosed in the invention. The processor 1101 may also be a combination that implements a computing function, for example, a combination consisting of one or more microprocessors, or a combination consisting of DSPs and microprocessors.

The bus 1102 may include a pathway to transfer information among the above components. The bus 1102 may be a peripheral component interconnect (PCI) bus or an extended industry standard architecture (EISA) bus. The bus 1102 may be categorized as an address bus, a data bus, a control bus, and the like. For ease of representation, the bus 1102 is represented by only one thick line in FIG. 11, but it does not indicate that there is only one bus or one type of bus.

The memory 1103 may be a read only memory (ROM) or other types of static storage devices for storing static information and instructions, a random access memory (RAM) or other types of dynamic storage devices for storing information and instructions, an electrically erasable programmable ROM (EEPROM), a Compact Disc-ROM (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store expected program codes in the form of instructions or data structures and can be accessed by a computer, which is not limited herein.

The memory 1103 is configured to store application codes for executing the solution of the invention, and the execution is controlled by the processor 1101. The processor 1101 is configured to execute the application codes stored in the memory 1103 to implement the contents shown in the foregoing method embodiments.

The electronic device includes but is not limited to: a mobile phone, a notebook computer, a digital broadcast receiver, a personal digital assistant (PDA), a Pad, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 11 is only an example and should not impose any limitation on the functions and scope of use of the embodiments of the invention.

The server provided by the invention may be a standalone physical server, a server cluster or a distributed system comprising multiple physical servers, or a cloud server providing basic cloud computing services such as cloud services, cloud database, cloud computing, cloud functions, cloud storage, network services, cloud communication, middleware services, domain name services, security services, content distribution network (CDN), and big data and artificial intelligence platforms. The terminal may include, but is not limited to, a smartphone, a tablet computer, a laptop, a desktop computer, a smart speaker, and a smart watch. The terminal and the server may be connected directly or indirectly in a wired or wireless manner, which is not limited herein.

The embodiment of the invention provides a computer readable storage medium. The computer readable storage medium stores a computer program, and when the computer program is executed by a computer, the computer is caused to implement the corresponding contents in the above method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowcharts of the accompanying drawings may include multiple sub-steps or multiple stages. These sub-steps or stages are not necessarily executed at the same time, but may be executed at different times, and the order of execution is not necessarily sequential, but may be executed in turn or alternately with other steps or at least a portion of sub-steps or stages of other steps.

It is noted that the computer readable medium described above in the invention may be a computer readable signal medium, a computer-readable storage medium or any combination thereof. The computer readable storage medium may include, but is not limited to, an electrical, magnetic, optical, electromagnetic, infrared, or semiconducting system, apparatus or device, or any combination thereof. More specific examples of the computer readable storage medium may include, but are not limited to, electrical connections having one or more wires, portable computer disks, hard disks, RAMs, ROMs, erasable programmable ROMs (EPROMs or flash memories), optical fibers, portable CD-ROMs, optical storage devices, magnetic memory devices, or any suitable combination thereof. In the invention, the computer readable storage medium may be any tangible medium containing or storing programs that can be used by or in combination with an instruction execution system, apparatus or device. In the invention, the computer readable signal medium may include a data signal propagated in a baseband or as part of a carrier that carries computer readable program codes. The propagated data signal may take a variety of forms, which includes, but is not limited to, an electromagnetic signal, an optical signal, or any suitable combination thereof. The computer readable signal medium may also be any computer readable medium other than the computer readable storage medium. The computer readable signal medium may send, propagate, or transmit a program that can be used by or in combination with an instruction execution system, apparatus, or device. The program code stored on the computer readable medium may be transmitted using any suitable medium, which includes, but is not limited to: wire, fiber optic cable, radio frequency (RF), or any suitable combination thereof.

The above computer readable medium may be contained in the above electronic device or exist independently rather than being assembled into the electronic device.

The computer readable medium carries one or more programs. When the one or more programs are executed by the electronic device, the electronic device is caused to implement the method shown in the above embodiments.

According to an aspect of the invention, a computer program product or computer program is provided. The computer program product or computer program includes computer instructions stored in a computer readable storage medium. The processor of the computer device reads the computer instructions from the computer readable storage medium, and the processor executes the computer instructions to cause the computer to implement the methods provided in the above optional implementations.

The computer program codes for performing the operations of the invention may be written in one or more programming languages or combinations thereof. The above programming languages include object-oriented programming languages, such as Java, Smalltalk and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a local area network (LAN) or a wide area network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the invention. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in a reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the invention may be realized through software or hardware. The name of a module does not constitute a limitation of the module itself in a certain case. For example, module A may also be described as "module A for performing an operation B".

The above description is only preferred embodiments of the invention and an explanation of the technical principles utilized. It should be understood by those skilled in the art that the scope of invention involved in the invention is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the invention.

## Claims

1. A communication method, applied to a relay station (STA), comprising:
receiving, on a first link, a first block acknowledgement (BA) request frame sent by a source STA; and
in response to the first BA request frame, sending a second BA request frame to a destination STA on a second link.

2. The method according to claim 1, wherein the first BA request frame comprises first identification information, and the first identification information indicates a link on which the source STA receives a first BA message frame;
wherein the first BA message frame is a BA message frame corresponding to the first BA request frame.

3. The method according to claim 2, wherein after sending the second BA request frame to the destination STA on the second link, the method comprises:
receiving, on the second link, a second BA message frame sent by the destination STA;
wherein the second BA message frame is a BA message frame corresponding to the second BA request frame.

4. The method according to claim 3, wherein after receiving on the second link the second BA message frame sent by the destination STA, the method comprises:
sending the first BA message frame to the source STA on the link indicated by the first identification information.

5. The method according to any one of claims 1-4, wherein there are at least two links between the relay STA and the source STA, and first duration information of the first BA request frame is time length information of the first BA request frame.

6. The method according to claim 1, wherein after receiving on the first link the first BA request frame sent by the source STA, the method comprises:
sending a first acknowledgement (ACK) message frame to the source STA.

7. The method according to claim 6, wherein second duration information of the first ACK message frame comprises a sum of a duration of the second BA request frame, a duration of a first short inter frame space (SIFS) and a duration of a second BA message frame, and the second BA message frame is a BA message frame corresponding to the second BA request frame.

8. The method according to claim 7, wherein the second duration information further comprises a sum of a duration of the first BA request frame and a duration of a second SIFS.

9. The method according to claim 2, further comprising:
receiving an ADDBA request frame sent by the source STA, wherein the ADDBA request frame comprises second identification information, and the second identification information indicates that the source STA receives the first BA message frame.

10. A communication method, applied to a source station (STA), comprising:
sending a first block acknowledgement (BA) request frame to a relay STA on a first link to instruct the relay STA to send a second BA request frame to a destination STA on a second link.

11. The method according to claim 10, wherein the first BA request frame comprises first identification information, and the first identification information indicates a link on which the source STA receives a first BA message frame;
wherein the first BA message frame is a BA message frame corresponding to the first BA request frame.

12. The method according to claim 11, further comprising:
receiving, on the link indicated by the first identification information, the first BA message frame sent by the relay STA, wherein the first BA message frame is sent by the relay STA after receiving, on the second link, a second BA message frame sent by the destination STA.

13. The method according to any one of claims 10-12, wherein there are at least two links between the relay STA and the source STA, and first duration information of the first BA request frame is time length information of the first BA request frame.

14. The method according to claim 10, wherein after sending the first BA request frame to the relay STA on the first link, the method comprises:
receiving a first acknowledgement (ACK) message frame sent by the relay STA.

15. The method according to claim 14, wherein second duration information of the first ACK message frame comprises a sum of a duration of the second BA request frame, a duration of a first short inter frame space (SIFS) and a duration of a second BA message frame, and the second BA message frame is a BA message frame corresponding to the second BA request frame.

16. The method according to claim 15, wherein the second duration information further comprises a sum of a duration of the first BA request frame and a duration of a second SIFS.

17. The method according to claim 11, further comprising:
determining an ADDBA request frame, wherein the ADDBA request frame comprises second identification information, and the second identification information indicates that the source STA receives the first BA message frame; and
sending the ADDBA request frame.

18. A communication method, applied to a destination station (STA), comprising:
receiving, on a second link, a second block acknowledgement (BA) request frame sent by a relay STA;
wherein the second BA request frame is sent by the relay STA after receiving, on a first link, a first BA request frame sent by a source STA.

19. The method according to claim 18, wherein after receiving on the second link the second BA request frame sent by the relay STA, the method comprises:
sending a second BA message frame to the relay STA on the second link;
wherein the second BA message frame is a BA message frame corresponding to the second BA request frame.

20. An electronic device, wherein the electronic device is a relay station (STA), the electronic device comprises:
a first receiving module, configured to receive, on a first link, a first block acknowledgement (BA) request frame sent by a source STA; and
a first sending module, configured to, in response to the first BA request frame, send a second BA request frame to a destination STA on a second link.

21. An electronic device, wherein when the electronic device is a source station (STA), the electronic device comprises:
a second sending module, configured to send a first block acknowledgement (BA) request frame to a relay STA on a first link to instruct the relay STA to send a second BA request frame to a destination STA on a second link.

22. An electronic device, wherein the electronic device is a destination station (STA), the electronic device comprises:
a second receiving module, configured to receive, on a second link, a second block acknowledgement (BA) request frame sent by a relay STA;
wherein the second BA request frame is sent by the relay STA after receiving on a first link a first BA request frame sent by a source STA.

23. An electronic device, comprising a memory, a processor and a computer program stored in the memory and executable by the processor, wherein the processor implements the method according to any one of claims 1-9, claims 10-17 and claims 18-19 when executing the program.

24. A computer-readable storage medium, wherein the computer-readable storage medium stores a computer program, and when the computer program is executed by a processor, the method according to any one of claims 1-9, claims 10-17 and claims 18-19 is implemented.
